(19) Europäisches Patentamt / European Patent Office / Office européen des brevets

(11) **EP 3 626 780 A1**

(12) **EUROPEAN PATENT APPLICATION**
published in accordance with Art. 153(4) EPC

(43) Date of publication:
**25.03.2020   Bulletin 2020/13**

(21) Application number: **18801647.1**

(22) Date of filing: **10.05.2018**

(51) Int Cl.:
*C08L 83/04* (2006.01)     *C08F 283/12* (2006.01)
*C08G 77/08* (2006.01)     *C08J 3/12* (2006.01)
*C08J 3/16* (2006.01)

(86) International application number:
**PCT/JP2018/018101**

(87) International publication number:
**WO 2018/212062 (22.11.2018 Gazette 2018/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **17.05.2017   JP 2017098449**

(71) Applicant: **Mitsubishi Chemical Corporation
Tokyo 100-8251 (JP)**

(72) Inventors:
• **SHIMONAKA, Ayako**
  **Tokyo 100-8251 (JP)**
• **NIINO, Hiroshi**
  **Tokyo 100-8251 (JP)**
• **MATSUOKA, Shinji**
  **Tokyo 100-8251 (JP)**
• **FUJIKAWA, Yuichiro**
  **Tokyo 100-8251 (JP)**

(74) Representative: **Ter Meer Steinmeister & Partner
Patentanwälte mbB
Nymphenburger Straße 4
80335 München (DE)**

(54) **POLYORGANOSILOXANE-CONTAINING-RUBBER LATEX AND PRODUCTION METHOD THEREFOR, POLYORGANOSILOXANE-CONTAINING-RUBBER-GRAFTED POLYMER, POWDER, RESIN COMPOSITION, AND MOLDED OBJECT**

(57)    An object of the present invention is to provide an impact modifier that provides impact resistance to a molded object obtained by molding a resin composition such as polycarbonate at a high temperature, and exhibits more excellent heat stability (preservation of mechanical properties after a wet heat test, discoloration, and flame retardance), and a thermoplastic resin composition including the impact modifier. The polyorganosiloxane-containing-rubber latex, in which a total amount of sulfate ions and sulfonate ions included in 100 g of the solid content is 2.4 mmol or less, a powder thereof, and a resin composition including the powder and a resin. Further, a molded object thereof and a production method therefor are provided.

EP 3 626 780 A1

**Description**

TECHNICAL FIELD

The present invention relates to a polyorganosiloxane-containing-rubber latex, a production method therefor, a polyorganosiloxane-containing-rubber-grafted polymer, a powder thereof, a resin composition including the powder, and a molded object obtained by molding the resin composition.

Priority is claimed on Japanese Patent Application No. 2017-098449, filed on May 17, 2017, the content of which is incorporated herein by reference.

BACKGROUND ART

For the purpose of improving the impact resistance of the resin composition, an impact modifier having a rubber grafted polymer obtained by graft-polymerizing a vinyl polymer to rubber is widely used.

In recent years, thinning of the resin composition is in progress in the market. The tendency is remarkable in engineering plastics with high heat resistance. Representative examples of engineering plastics include aromatic polycarbonate resins and aromatic polyesters, but the molding temperature has to be increased for the thinning of these engineering plastics. Engineering plastics are often weak in stress concentration (notched impact strength, and the like), and rubber is often compounded. However, in an engineering plastic-containing resin composition obtained by adding an impact modifier in which a rubber component is butadiene, if a molding temperature is increased, coloration derived from butadiene is observed, and a decrease in strength is often observed. In addition, the molded object of the obtained resin composition deteriorates even under the using temperature environment (for example, after being preserved for several tens of hours under an environment of 120°C or after being preserved for several hundred hours under an environment of 85°C and 85 relative humidity), and external appearance defects occur due to deterioration of mechanical properties or discoloration.

Examples of the rubber having impact strength comparable to butadiene rubber include polyorganosiloxane. Polyorganosiloxane itself is more resistant to heat than polybutadiene.

Generally, an emulsion polymerization method is suitably used as a method for producing a polyorganosiloxane-containing-rubber-grafted polymer suitable for an engineering plastic resin composition. Patent Documents 1 and 2 disclose, as a specific example, a polyorganosiloxane-containing-rubber-grafted polymer produced using a sulfonic acid salt-based polymerization emulsifier. However, particularly when an aromatic polycarbonate resin composition containing the impact modifier disclosed in these prior arts is molded in a high temperature range, heat stability (maintenance of mechanical properties after a wet heat test, discoloration, and flame retardance) and/or impact resistance were not always sufficiently exhibited. In addition, the quality retention under severe operating temperature environments (for example, after being preserved for several tens of hours under an environment of 120°C or after being preserved for several hundred hours under an environment of 85°C and 85 relative humidity) was not sufficiently satisfactory.

Patent Document 3 discloses a method for washing a residue in emulsion polymerization derived from a sulfonic acid salt-based polymerization emulsifier with methanol or the like. The residue is securely removed with methanol or the like, but in a stage in which the residue is removed to some extent, it is considered that the physical properties are not improved.

It is generally known to improve thermal coloring associated with thermal decomposition, deterioration in mechanical strength, and flame retardance by formulating pentavalent phosphorus to an aromatic polycarbonate resin, aromatic polyester, or the like.

Patent Document 4 discloses a butadiene-based rubber-containing grafted polymer that improves heat and moisture resistance by utilizing a phosphoric acid-based emulsifier rather than a highly acidic emulsifier such as a sulfonic acid salt-based polymerization emulsifier.

Patent Document 5 discloses an example in which polymerization is performed with phosphoric acid instead of a sulfonic acid and/or sulfuric acid-based catalyst generally used in the polymerization of polyorganosiloxane. However, in phosphoric acid and the like, the polymerization rate of cyclic siloxane such as octamethylcyclotetrasiloxane, which is widely used as a raw material for polyorganosiloxane, is not sufficient, and further improvement in the polymerization rate has been desired.

Citation List

Patent Document

Patent Document 1: International Publication No. WO 2010/024311
Patent Document 2: International Publication No. WO 2013/129709
Patent Document 3: Japanese Unexamined Patent Application, First Publication No. JP 2005-255961
Patent Document 4: International Publication No. WO 2013/157569
Patent Document 5: Japanese Unexamined Patent Application, First Publication No. JP 2015-110738

SUMMARY OF INVENTION

Problem to be Solved by the Invention

An object of the present invention is to provide a polyorganosiloxane-containing-rubber-grafted polymer useful for achieving both impact resistance and heat stability (maintenance of mechanical properties, discoloration, and flame retardance) of a thermoplastic resin, particularly engineering plastics at a higher level. The present invention provides an impact modifier that provides impact resistance to a molded object obtained by molding a resin composition such as polycarbonate at a high temperature, and exhibits more excellent heat stability (maintenance of mechanical properties after a wet heat test, discoloration, and flame retardance), and a thermoplastic resin composition including the impact modifier.

Means for Solving the Problem

As a result of the research, the present inventors have found that specific types and amounts of organosiloxane, an emulsifier, and an acid catalyst used in the process for producing the polyorganosiloxane-containing-rubber latex result in a polyorganosiloxane-containing-rubber-grafted polymer that can provide heat stability to a molded object obtained by improving impact resistance and molding at high temperature and can provide long-term wet heat aging resistance and flame retardance, when, in the presence of the polyorganosiloxane-containing-rubber latex, the powder of the polyorganosiloxane-containing-rubber-grafted polymer obtained by polymerizing a vinyl monomer is formulated with a resin such as polycarbonate.

The above-described problem is solved by any one of the following [1] to [18] of the present invention.

[1] A polyorganosiloxane-containing-rubber latex, including: a phosphorus element in a solid content.

[2] The polyorganosiloxane-containing-rubber latex according to [2], in which a total amount of sulfate ions and sulfonate ions included in 100 g of the solid content is 2.4 mmol or less.

[3] The polyorganosiloxane-containing-rubber latex according to [1] or [2], in which a content of the phosphorus element included in the solid content is 100 ppm to 10,000 ppm.

[4] The polyorganosiloxane-containing-rubber latex according to any one of [1] to [3], in which a content of a sulfur element included in the solid content is 750 ppm or less.

[5] A polyorganosiloxane-containing-rubber-grafted polymer, in which a content of a sulfur element is 110 ppm or less, a content of polyorganosiloxane is 5 mass% to 90 mass% with respect to 100 mass% of the polyorganosiloxane-containing-rubber-grafted polymer, and
a content of a phosphorus element is 30 ppm to 3,000 ppm.

[6] The polyorganosiloxane-containing-rubber-grafted polymer including: a content of an emulsifier including sulfur is 80 ppm or less in terms of sulfur.

[7] The polyorganosiloxane-containing-rubber-grafted polymer according to [5] or [6], in which a content of polyorganosiloxane is 30 mass% to 85 mass%.

[8] The polyorganosiloxane-containing-rubber-grafted polymer according to any one of [5] to [7], in which a content of a phosphorus element is 30 ppm to 750 ppm.

[9] The polyorganosiloxane-containing-rubber-grafted polymer according to any one of [5] to [8], in which a content of a sulfur element is 50 ppm or less.

[10] The polyorganosiloxane-containing-rubber-grafted polymer according to any one of [5] to [9], in which a content of an emulsifier including sulfur is 1 ppm or less in terms of sulfur.

[11] A method for producing a polyorganosiloxane-containing-rubber latex, the method including: polymerizing organosiloxane in an aqueous medium including organosiloxane, water, an organic acid catalyst, and an emulsifier, in which the organic acid catalyst is an organic acid catalyst including a phosphorus element.

[12] The method for producing a polyorganosiloxane-containing-rubber latex according to [11], in which the organosiloxane is hexamethylcyclotrisiloxane.

[13] The method for producing a polyorganosiloxane-containing-rubber latex according to [11], in which the organosiloxane is dihydroxy-terminated polydimethylsiloxane.

[14] A polyorganosiloxane-containing-rubber-grafted polymer obtained by graft-polymerizing a vinyl monomer to the polyorganosiloxane-containing-rubber according to any one of [1] to [4].

[15] The polyorganosiloxane-containing-rubber-grafted polymer according to [14], in which the polyorganosiloxane is a composite rubber containing polyorganosiloxane and polyalkyl (meth)acrylate.

[16] A powder obtained by coagulation or spray-drying a latex of the polyorganosiloxane-containing-rubber-grafted polymer according to [14] or [15].

[17] A resin composition including: the powder of the polyorganosiloxane-containing-rubber-grafted polymer according to [16] and a resin.

[18] An obtained molded object obtained by molding the resin composition according to [17].

Advantageous Effects of Invention

According to the present invention, it is possible to provide a polyorganosiloxane-containing-rubber-grafted polymer useful for achieving both of the impact resistance and the heat stability (maintenance of mechanical properties, discoloration, and flame retardance) of a thermoplastic resin, which have been difficult in the related art in a higher level.

MODE FOR CARRYING OUT THE INVENTION

<Polyorganosiloxane-containing-rubber latex>

The polyorganosiloxane that can be used in the present invention preferably has a vinyl polymerizable functional group. Since the polyorganosiloxane has a vinyl polymerizable functional group, chemical bond can be introduced between polyorganosiloxane and a composite rubber component containing a polymer including a vinyl monomer described below or a graft monomer component.

The polyorganosiloxane having a vinyl polymerizable functional group can be obtained by polymerizing dimethylsiloxane, siloxane having a vinyl polymerizable functional group, a siloxane-based crosslinking agent as required, and a linear or branched siloxane having a terminal group selected from a hydroxyl group, an amino group, and a hydrolyzable group as required.

Examples of dimethylsiloxane include dimethylsiloxane-based cyclic compounds having three or more membered rings, and specific examples thereof include hexamethylcyclotrisiloxane, octamethylcyclotetrasiloxane, decamethylcyclopentasiloxane, and dodecamethylcyclohexasiloxane. Among these, in view of easy polymerization even under conditions in which the types and amounts of the emulsifier and the acid catalyst are optimized, octamethylcyclotetrasiloxane and hexamethylcyclotrisiloxane are preferable, and hexamethylcyclotrisiloxane is more preferable. These can be used singly or two or more of these may be used in combination.

Dihydroxy-terminated polydimethylsiloxane having an average molecular weight of 300 or more can also be used. A preferable average molecular weight of dihydroxy-terminated polydimethylsiloxane is 300 to 100,000, more preferably 500 to 50,000, and particularly preferably 1,000 to 15,000. If the average molecular weight is 300 or more, it is possible to suppress remaining of a large amount of unreacted low molecular weight organosiloxane, so it is possible to prevent a volatile organic substance from becoming a problem in the production process and the obtained molded object. Meanwhile, if the average molecular weight is 100,000 or less, the viscosity of the dihydroxy-terminated polydimethylsiloxane is lowered, and handleability becomes satisfactory.

Siloxane having a vinyl polymerizable functional group is a siloxane compound that has a vinyl polymerizable functional group and can be bonded to dimethylsiloxane via a siloxane bond. In view of reactivity with dimethylsiloxane, various alkoxysilane compounds having a vinyl polymerizable functional group are preferable. The siloxane having a vinyl polymerizable functional group is a component for introducing a vinyl polymerizable functional group into a side chain or a terminal of the silicone-based polymer.

Examples of the siloxane having a vinyl polymerizable functional group include (meth)acryloyloxysilane such as β-(meth)acryloyloxyethyldimethoxymethylsilane, γ-(meth)acryloyloxypropyldimethoxymethylsilane, γ-(meth)acryloyloxypropylmethoxydimethylsilane, γ-(meth)acryloyloxypropyltrimethoxysilane, γ-(meth)acryloyloxypropylethoxydiethylsilane, γ-(meth)acryloyloxypropyldiethoxymethylsilane, and δ-(meth)acryloyloxybutyldiethoxymethylsilane; vinyl siloxane such as tetramethyltetravinylcyclotetrasiloxane and methoxydimethylvinylsilane; vinylphenylsilane such as p-vinylphenyldimethoxymethylsilane; mercaptosilane such as γ-mercaptopropyldimethoxymethylsilane and γ-mercaptopropyltrimethoxysilane; and disiloxane such as 1,3-bis(3-methacryloyloxypropyl)tetramethyldisiloxane and 1,3-bis(3-mercaptopropyl)tetramethyldisiloxane. These can be used singly or two or more kinds thereof can be used in combination.

A siloxane-based crosslinking agent is a component for introducing a crosslinked structure into a silicone-based polymer to form a rubber, and examples thereof include trifunctional or tetrafunctional silane-based crosslinking agents. Examples of the siloxane crosslinking agent include a trifunctional crosslinking agent such as methyltrimethoxysilane, phenyltrimethoxysilane, and ethyltriethoxysilane, and a tetrafunctional crosslinking agent such as tetraethoxysilane, 1,3-bis[2-(dimethoxymethylsilyl)ethyl] benzene, 1,4-bis[2-(dimethoxymethylsilyl)ethyl]benzene, 1,3-bis[1-(dimethoxymethylsilyl)ethyl]benzene, 1,4-bis[1-(dimethoxymethylsilyl)ethyl]benzene, 1-[1-(dimethoxymethylsilyl)ethyl]-3-[2-(dimethoxymethylsilyl)ethyl]benzene, and 1-[1-(dimethoxymethylsilyl)ethyl]-4-[2-dimethoxymethylsilyl)ethyl]benzene. These crosslinking agents can be used singly or two or more kinds thereof can be used in combination. The addition amount of the crosslinking agent is preferably 0.01 mass% to 10 mass% and more preferably 0.1 mass% to 3.0 mass% with respect to the polyorganosiloxane. If the addition amount of the crosslinking agent is 0.01 mass% to 10 mass%, the flexibility of the polyorganosiloxane is not impaired, and deterioration of the impact resistance of the final molded object can be prevented.

Linear or branched siloxanes having a terminal group selected from a hydroxyl group, an amino group, and a hydrolyzable group can be obtained by a known method as disclosed in Japanese Unexamined Patent Application, First Publication Nos. JP 2001-288269 and JP H11-222554. The mass average molecular weight of the linear or branched siloxane having a terminal group is preferably 300 to 10,000, more preferably 500 to 5,000, and even more preferably 1,000 to 3,000.

In the present invention, examples of the method for producing the polyorganosiloxane-containing-rubber latex include the following methods.

First, an emulsifier and water are added to a siloxane mixture containing dimethylsiloxane, siloxane having a vinyl polymerizable functional group, a siloxane-based crosslinking agent as required, and a linear or branched siloxane having a terminal group selected from a hydroxyl group, an amino group, and a hydrolyzable group to obtain a siloxane latex. Next, the siloxane is finely particulated in water by using Ultra turrax, a high pressure generator or the like that finely particulates the siloxane latex by a shearing force by high-speed rotation, to obtain a finely particulated siloxane latex.

Thereafter, the finely particulated siloxane latex is polymerized under an organic acid catalyst. The polymerization temperature is preferably 60°C to 90°C and more preferably 70°C to 85°C. After the polymerization, the finely particulated siloxane latex is neutralized with an alkaline substance to obtain a polyorganosiloxane latex.

Since the particle size distribution of the polyorganosiloxane can be reduced, as a method for obtaining a finely particulated siloxane latex, the siloxane latex is finely particulated preferably at a high pressure of 10 MPa to 200 MPa and more preferably at a high pressure of 20 MPa to 100 MPa.

In the present invention, a preferable method for producing a polyorganosiloxane-containing-rubber latex is to polymerize organosiloxane by using an emulsifier including a phosphorus element and an organic acid catalyst.

The emulsifier used in producing the polyorganosiloxane-containing-rubber latex is not particularly limited, but in view of reducing amounts of sulfate ions and sulfonate ions in the latex, an anionic emulsifier including a phosphorus element is preferable.

As an anionic emulsifier including a phosphorus element, polyoxyalkylene alkylphenyl ether phosphate and polyoxyalkylene alkyl ether phosphate are preferable, polyoxyethylene alkylphenyl ether phosphate and polyoxyethylene alkyl ether phosphate are more preferable, and polyoxyethylene alkyl ether phosphate is even more preferable.

The alkyl group of the polyoxyethylene alkyl ether phosphate has 1 to 20 carbon atoms, preferably 5 to 18 carbon atoms, more preferably 7 to 16 carbon atoms, and even more preferably 10 to 16 carbon atoms.

The number of oxyethylene units in the polyoxyethylene alkyl ether phosphate is 2 to 14, preferably 2 to 10, more preferably 2 to 8, and even more preferably 2 to 6.

These emulsifiers do not easily deteriorate the polycarbonate resin or the polyester resin, and can be easily removed from the rubber graft copolymer by washing with water or a solvent.

The usage amount of the emulsifier is preferably 0.05 parts by mass to 10 parts by mass with respect to 100 parts by mass of the siloxane mixture. If the usage amount of the emulsifier is 0.05 parts by mass or more with respect to 100 parts by mass of the siloxane mixture, the emulsified dispersion state of the siloxane mixture becomes stable, and if the usage amount is 10 parts by mass or less, hydrolysis resistance of the obtained resin composition and the coloration associated with heat aging can be suppressed.

The organic acid catalyst used for polymerizing the organosiloxane is not particularly limited as long as the pKa is 3 or less, but oxo acid is preferable. Oxo acid refers to a compound in which a hydroxyl group and an oxo group are bonded to a specific atom, and the hydroxyl group gives an acidic proton. Examples of the oxo acid including a phosphorus atom or a sulfur atom include a phosphoric acid, a phosphorous acid, a sulfonic acid, a sulfinic acid, a sulfurous acid, and a sulfuric acid. These acid catalysts can be used singly or two or more kinds thereof can be used in combination. In view of not easily deteriorating the polycarbonate resin or the polyester resin, it is preferable to use oxophosphoric acid including a phosphorus element.

The usage amount of the organic acid catalyst is preferably 0.05 parts by mass to 10 parts by mass and more preferably 0.2 parts by mass to 5 parts by mass with respect to 100 parts by mass of the siloxane mixture. If the usage amount of the organic acid catalyst is 0.05 parts by mass or more, the polymerization rate of the siloxane mixture is appropriate, and the productivity of the silicone-based polymer becomes satisfactory, and if the usage amount is 10 parts by mass or less, the deterioration of the hydrolysis resistance of the obtained resin composition can be suppressed.

Examples of the method for adding the organic acid catalyst when the organosiloxane is polymerized include a method for adding the organic acid catalyst to the siloxane mixture latex at once and a method for adding dropwise the organic acid catalyst to the siloxane mixture latex at a constant rate.

The polymerization of the siloxane mixture can be stopped, for example, by cooling the reaction solution and adding an alkaline substance such as sodium hydroxide, potassium hydroxide, sodium carbonate, or ammonia to neutralize the latex.

In order to secure satisfactory heat and moisture resistance, heat aging resistance, and flame retardance without deteriorating the polycarbonate resin or the polyester resin, the total amount of the sulfate ions and the sulfonate ions included in 100 g of the solid content of the polyorganosiloxane-containing-rubber latex of the present invention is preferably 0.0001 mmol to 2.4 mmol (mass basis), more preferably 0.05 mmol to 2.4 mmol, even more preferably 0.1 mmol to 1.5 mmol, and and particularly preferably 0.1 mmol to 1.1 mmol. It is preferable that the total amount of the sulfate ions and the sulfonate ions is 2.4 mmol or less, because the hydrolysis resistance of the obtained molded object is not deteriorated and the physical properties are not significantly deteriorated. Further, it is preferable that the total amount of the sulfate ions and the sulfonate ions is 0.0001 mmol, because the amount of the organic acid catalyst at the time of producing the polyorganosiloxane is sufficient, and the polymerization time is not remarkably prolonged and the productivity is not deteriorated.

The total amount of the sulfate ions and the sulfonate ions included in 100 g of the solid content can be quantified by the method described in the examples of the present specification. That is, the total amount of sulfate ions and sulfonate ions can be measured using a sample obtained by completely burning the solid content of the rubber latex and causing the generated gas to be absorbed in a hydrogen peroxide solution.

The total amount of the sulfate ions and the sulfonate ions included in 100 g of the solid content of the rubber latex is adjusted, for example, according to the selection of the amount and type of emulsifier and organic acid catalyst used in producing the polyorganosiloxane; the type of emulsifier used in producing the composite rubber and the amount of the reducing agent such as sodium formaldehyde sulfoxylate; and amounts of the emulsifier and the reducing agent such as sodium formaldehyde sulfoxylate used in polymerizing the graft monomer component. In addition, other emulsifiers and organic oxide may be used within the preferable range.

The polyorganosiloxane-containing-rubber latex of the present invention is required to contain a phosphorus element in the solid content. If a phosphorus element is included in the solid content, in a case where the latex is processed and used in a polycarbonate resin or a polyester resin, satisfactory heat and moisture resistance and flame resistance are secured without deteriorating the resin. Furthermore, the content of the phosphorus element included in the solid content is preferably 100 ppm to 10,000 ppm (mass basis), more preferably 500 ppm to 5,000 ppm (mass basis), and even more preferably 1,000 ppm to 4,000 ppm (mass basis).

In order to secure satisfactory heat and moisture resistance and aging resistance without deteriorating a polycarbonate resin or a polyester resin, the content of the sulfur element included in the solid content of the polyorganosiloxane-containing-rubber latex of the present invention is preferably 0.0001 ppm to 750 ppm (mass basis), more preferably 0.0001 ppm to 500 ppm (mass basis), even more preferably 0.0001 ppm to 300 ppm (mass basis), and most preferably 0.0001 ppm to 150 ppm (mass basis).

<Polyorganosiloxane-containing-rubber-grafted polymer>

As the polyorganosiloxane-containing-rubber of the present invention, polyorganosiloxane singly or a composite rubber (hereinafter referred to as a "composite rubber") containing a polymer including polyorganosiloxane and a vinyl monomer can be used. The composite rubber is a rubber obtained by compositing polyorganosiloxane and a polymer including a vinyl monomer. Examples of the composite rubber include a composite rubber including polyorganosiloxane and polyalkyl (meth)acrylate, a composite rubber including a polyorganosiloxane and butadiene-based rubber, and a composite rubber including polyorganosiloxane and a polymer having a glass transition temperature of 0°C or higher.

It is preferable that the polyalkyl (meth)acrylate that can be used in the present composite rubber has a crosslinked structure and has a glass transition temperature of 0°C or lower. The polyalkyl (meth)acrylate is obtained by polymerizing an alkyl (meth)acrylate component. The alkyl (meth)acrylate component contains alkyl (meth)acrylate and an acrylic crosslinking agent as required.

Examples of the alkyl (meth)acrylate include alkyl acrylate such as methyl acrylate, ethyl acrylate, n-propyl acrylate, n-butyl acrylate, and 2-ethylhexyl acrylate; and alkyl methacrylate having 6 or more carbon atoms in an alkyl group such as hexyl methacrylate, 2-ethylhexyl methacrylate, and n-dodecyl methacrylate. Among the alkyl (meth)acrylate, n-butyl acrylate is preferable because the impact resistance of the obtained molded object is improved. These can be used singly or two or more kinds thereof can be used in combination.

The acrylic crosslinking agent is a component for introducing a crosslinked structure into the polyalkyl (meth)acrylate rubber and also functions as a graft crossing point for grafting a vinyl monomer described below.

Examples of the acrylic crosslinking agent include allyl methacrylate, ethylene glycol di(meth)acrylate, propylene glycol di(meth)acrylate, 1,3-butylene glycol di(meth)acrylate, and 1,4-butylene glycol di(meth)acrylate, triallyl cyanurate, and triallyl isocyanurate. These can be used singly or two or more kinds thereof can be used in combination.

Examples of the method for producing the composite rubber include a method for adding a vinyl monomer component to a polyorganosiloxane latex and performing polymerization by using a known radical polymerization initiator to obtain a composite rubber latex.

Examples of the method for adding the alkyl (meth)acrylate component to the polyorganosiloxane latex include a method for adding the alkyl (meth)acrylate component to the polyorganosiloxane latex at once and the method for adding dropwise the alkyl (meth)acrylate component to the polyorganosiloxane latex at a constant rate.

Examples of the method for adding a polymer having a glass transition temperature of 0°C or higher to a polyorganosiloxane latex include a method for adding the styrene component to the polyorganosiloxane latex at once and a method for adding dropwise the styrene component to the polyorganosiloxane latex at a constant rate.

Among the above methods, the method for adding the alkyl (meth)acrylate component to the polyorganosiloxane latex at once because the impact resistance of the obtained molded object is improved.

When a polyorganosiloxane-containing-rubber latex is produced, in order to stabilize the latex and control the average particle size of the rubber, an emulsifier can be added.

Examples of the emulsifier used when the rubber latex is produced include the same emulsifiers used when the polyorganosiloxane latex described above is produced, and an emulsifier including a phosphorus element and a nonionic emulsifier are preferable. In view of reducing the amount of the sulfate ions and the sulfonate ions in the latex, the emulsifier is more preferably an emulsifier including a phosphorus element.

Examples of the polymerization initiator used for the polymerization of the vinyl monomer include one or more polymerization initiators selected from peroxide, organic peroxide, and an azo-based initiator.

As for the peroxide, there are a case where the peroxide is used singly and a case where the peroxide is used as a redox-based initiator in combination with a reducing agent. Similarly, the organic peroxide may be used singly or in combination with a reducing agent or the like as a redox-based initiator.

The azo-based initiator includes an oil-soluble azo-based initiator and a water-soluble azo-based initiator.

Examples of the oil-soluble azo-based initiator include 2,2'-azobisisobutyronitrile and dimethyl 2,2'-azobis(2-methylpropionate). These can be used singly or two or more kinds thereof can be used in combination.

Examples of water-soluble azo-based initiators include a water soluble azo-based initiator such as 4,4'-azobis(4-cyanovaleric acid), 2,2'-azobis[N-(2-carboxymethyl)-2-methylpropionamidine]hydrate, 2,2'-azobis-(N,N'-dimethyleneisobutylamidine)dihydrochloride, and 2,2'-azobis[2-(2-imidazolin-2-yl) propane] dihydrochloride. These can be used singly or two or more kinds thereof can be used in combination.

Examples of the peroxide include hydrogen peroxide, potassium persulfate, and ammonium persulfate. These can be used singly or two or more kinds thereof can be used in combination.

Examples of organic peroxides include diisopropylbenzene hydroperoxide, p-menthane hydroperoxide, cumene hydroperoxide, t-butyl hydroperoxide, succinic acid peroxide, t-butyl peroxyneodecanoate, t-butylperoxyneoheptanoate, t-butylperoxypivalate, 1,1,3,3-tetramethylbutylperoxy-2-ethylhexanoate, and t-butylperoxy-2-ethylhexanoate. These can suppress hydrolysis of the obtained resin composition. These can be used singly or two or more kinds thereof can be used in combination.

When peroxide or organic peroxide is combined with a reducing agent to form a redox-based initiator, it is preferable that the above peroxide or organic peroxide, a reducing agent such as sodium formaldehyde sulfoxylate, L-ascorbic acid, fructose, dextrose, sorbose, or inositol, and ethylenediaminetetraacetic acid disodium salt with ferrous sulfate are combined to be used.

These reducing agents can be used singly or two or more kinds thereof can be used in combination. In addition, in a case where sodium formaldehyde sulfoxylate as a reducing agent is used, in view of reducing the total amount of the sulfate ions and the sulfonate ions in the latex, it is preferable to suppress the usage amount as much as possible. Specifically, the usage amount is preferably 0.01 parts to 0.3 parts, more preferably 0.01 parts to 0.2 parts, and even more preferably 0.01 parts to 0.05 parts with respect to 100 parts by weight of the polyorganosiloxane and the vinyl monomer to be formulated in the production of the polyorganosiloxane-containing-rubber-grafted polymer.

Examples of the oil-soluble azo-based initiator include 2,2'-azobisisobutyronitrile and dimethyl 2,2'-azobis(2-methylpropionate). These can be used singly or two or more kinds thereof can be used in combination.

Examples of water-soluble azo-based initiators include a water soluble azo-based initiator such as 4,4'-azobis(4-cyanovaleric acid), 2,2'-azobis[N-(2-carboxymethyl)-2-methylpropionamidine]hydrate, 2,2'-azobis-(N,N'-dimethyleneisobutylamidine)dihydrochloride, and 2,2'-azobis[2-(2-imidazolin-2-yl)propane]dihydrochloride. These can be used singly or two or more kinds thereof can be used in combination.

Among the above polymerization initiators, because the amounts of the sulfate ions and the sulfonate ions in the latex can be reduced, among the redox-based initiators, it is preferable to use L-ascorbic acid, fructose, dextrose, sorbose, and inositol are used as the reducing agent.

The content of the polymer including polyorganosiloxane and a vinyl monomer in the composite rubber (100 mass%) is preferably 1 mass% to 99 mass% of polyorganosiloxaneor and 1 mass% to 99 mass% of the polymer including a vinyl monomer.

If the content of the polyorganosiloxane in the present composite rubber is 1 mass% or more, the impact resistance of the obtained molded object becomes satisfactory, and if the content thereof is 99 mass% or less, the colorability of the obtained molded object is deteriorated.

If the content of the polymer including a vinyl monomer in the present composite rubber is 1 mass% or more, the colorability of the obtained molded object is not deteriorated, and if the content thereof is 99 mass% or less, the impact resistance of the obtained molded object becomes satisfactory.

Because the balance of the impact resistance and the colorability of the obtained molded object becomes satisfactory, it is preferable that the content of the polyorganosiloxane in the present composite rubber (100 mass%) is 7 mass% to 95 mass%, and the content of the polymer including a vinyl monomer is 33 mass% to 90 mass%.

If the content of the polyorganosiloxane and the polymer including a vinyl monomer can be calculated from a mass ratio of the polyorganosiloxane and the polymer component including a vinyl monomer that are used in the production of the present composite rubber.

The vinyl monomer polymerized in the presence of rubber latex including polyorganosiloxane is a graft monomer component, and is at least one monomer selected from (meth)acrylate for grafting, an aromatic vinyl monomer, and a vinyl cyanide monomer.

In the present invention, the degree of the graft component is calculated as a ratio in the polyorganosiloxane-containing-rubber-grafted polymer that dissolves in a good solvent to the graft component. For example, when (meth)acrylate is used as the graft component, as the acetone soluble content in the organosiloxane-containing-rubber-grafted polymer is smaller, it is considered that the grafting is better. The amount of the component soluble in acetone is preferably 0.1 parts by mass to 80 parts by mass and more preferably 0.1 parts by mass to 50 parts by mass with respect to 100 parts by mass of the graft component.

Examples of (meth)acrylate for grafting include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, and 2-ethylhexyl (meth)acrylate. These can be used singly or two or more kinds thereof can be used in combination.

Examples of the aromatic vinyl monomer include styrene, $\alpha$-methylstyrene, vinyl toluene, and chlorostyrene. These can be used singly or two or more kinds thereof can be used in combination.

Examples of the vinyl cyanide monomer include acrylonitrile and methacrylonitrile. These can be used singly or two or more kinds thereof can be used in combination.

Examples of the method for polymerizing the graft monomer component include a method for adding the graft monomer component to the polyorganosiloxane latex and performing polymerization in one stage or two or more stages.

When polymerization is performed in multiple stages, it is preferable that the polymerization is performed by adding the graft monomer component in portions or continuously in the presence of the polyorganosiloxane latex. According to the polymerization method, satisfactory polymerization stability can be obtained, and a latex having a desired particle size and the desired particle size distribution can be stably obtained.

Examples of the polymerization initiator used for the polymerization of the graft monomer component include the same polymerization initiators used for the polymerization of the alkyl (meth)acrylate component described above.

In these, since the amounts of the sulfate ions and the sulfonate ions in a polyorganosiloxane-containing-rubber-grafted polymer can be reduced, organic peroxide, a redox-based initiator, or an azo-based initiator is preferably used. Among redox-based initiators, L-ascorbic acid, fructose, dextrose, sorbose, and inositol are preferably used as the reducing agent.

When the monomer component is polymerized, in order to stabilize the latex and control the average particle size of the grafted polymer, an emulsifier can be added.

Examples of the emulsifier used when the graft monomer component is polymerized include the same emulsifiers as used in the production of the polyorganosiloxane latex as described above, and an emulsifier including a phosphorus element and a nonionic emulsifier are preferable. In view of reducing the amount of the sulfate ions and the sulfonate ions in the latex, an emulsifier containing phosphorus element is more preferable as the emulsifier.

The polyorganosiloxane-containing-rubber-grafted polymer of the present invention is produced by emulsion polymerization and is obtained in the form of a latex.

<Powder recovery>

The polyorganosiloxane-containing-rubber-grafted polymer of the present invention can be obtained as a powder by coagulating and washing the latex including a rubber graft copolymer obtained by emulsion polymerization, and by drying or spray-drying.

When a powder is recovered by the coagulation method, it is preferable that a salt including alkaline earth metal (Group 2) or earth metal (Group 13) such as aluminum (calcium chloride, calcium acetate, aluminum sulfate, and the like) is used as the coagulant, a large amount of water is used for washing, and the water in the slurry is sufficiently removed by using a centrifugal separator or the like. For example, after the polyorganosiloxane-containing-rubber-grafted polymer latex and a metal salt such as calcium acetate, magnesium acetate, calcium chloride, magnesium chloride, magnesium sulfate, and aluminum chloride are mixed and coagulated, a heat treatment, dehydration, washing, and drying are performed according to known methods, to separate the polyorganosiloxane-containing-rubber-grafted polymer from the aqueous medium (coagulation method).

As the metal salt, since deterioration with respect to the polycarbonate resin is low, calcium chloride and calcium acetate are preferable.

The polyorganosiloxane-containing-rubber-grafted polymer is preferably washed with water and/or a solvent. For example, it is preferable to diluting the slurry before dehydration in preferably 20 times, more preferably 30 times, and even more preferably 50 times or more of the solid content of the polyorganosiloxane-containing-rubber-grafted polymer in the step after salt coagulation, to wash the polyorganosiloxane-containing-rubber-grafted polymer with preferably 3 times, more preferably 5 times, and even more preferably 10 times or more of the solvent with respect to the solid content of the polyorganosiloxane-containing-rubber-grafted polymer or with sprayed water in view of environmental impact in the step after dehydration, or to re-disperse the dehydrated resin preferably in 5 times or more of the above solvent or preferably water with respect to the solid content in the step after dehydration and performing dehydrate again, because residual metal salt in the polyorganosiloxane-containing-rubber-grafted polymer can be reduced, problems such as burning and decomposition at the time of molding of the thermoplastic resin composition can be reduced, and satisfactory heat stability can be provided.

A water-soluble organic solvent such as alcohol such as methanol, ethanol, or propanol, or acetone is added to the latex to precipitate the polyorganosiloxane-containing-rubber-grafted polymer, and the polyorganosiloxane-containing-rubber-grafted polymer is separated from the solvent by centrifugation or filtration, and dried for isolation. As another method, a method in which an organic solvent having some water solubility such as methyl ethyl ketone is added to the latex including the polyorganosiloxane-containing-rubber-grafted polymer used in the present invention, the polyorganosiloxane-containing-rubber-grafted polymer component in the latex is extracted to the organic solvent layer, the organic solvent layer is separated, the resultant is mixed with water, and the polyorganosiloxane-containing-rubber-grafted polymer component is precipitated.

The latex can also be directly powdered by a spray drying method. In this case, the same effect can be obtained by washing the obtained powder with a solvent in the same manner as the coagulation method described above. Alternatively, the same effect can be obtained by adding calcium acetate, magnesium acetate or the like to the obtained powder, preferably to a solution such as an aqueous solution, and performing re-drying as required.

As described above, there are many methods for pulverizing the polyorganosiloxane-containing-rubber-grafted polymer of the present invention, but the coagulation method is particularly preferable.

When the powder is collected by spray drying, all the sulfate ions and the sulfonate ions in the polyorganosiloxane-containing-rubber-grafted latex are contained in the powder. However, in a case of the coagulation method, sulfate ions and sulfonate ions included in the polyorganosiloxane-containing-rubber latex are combined with a salt of alkaline earth metal, aluminum, or the like, to become a relatively poorly soluble salt. When washing is performed with 3,000 parts by mass or more of washing water with respect to 100 parts by weight of the powder (powder from which water in the slurry has been removed) included in the slurry, about 80% of the material derived from the sulfate ions and the sulfonate ions included in the polyorganosiloxane-containing-rubber latex is removed.

Most of the phosphorus element included in the polyorganosiloxane-containing-rubber latex is a pentavalent alkali metal salt. When powder is recovered by a spray drying method, all the alkali metal salts of pentavalent phosphorus included in the polyorganosiloxane-containing-rubber grafted latex are contained in the powder. However, in a case of the coagulation method, the alkali metal salt of phosphorus included in the polyorganosiloxane-containing-rubber grafted latex is combined with a salt of alkaline earth metal, aluminum, or the like to form a relatively poorly soluble salt. Even when washing is performed with 3,000 parts by weight or more of washing water with respect to 100 parts by weight of powder included in the slurry (powder from which water in the slurry is removed), 5 mass% to 75 mass% of a phosphorus element included in the polyorganosiloxane-containing-rubber latex can be removed.

It is required that the content of the sulfur element in the powder of the polyorganosiloxane-containing-rubber-grafted polymer is 0.0001 ppm to 110 ppm, the content of polyorganosiloxane is 5 mass% to 90 mass% with respect to 100 mass% of the polyorganosiloxane-containing-rubber-grafted polymer, and the content of the phosphorus element is 30 ppm to 3,000 ppm.

The content of the sulfur element in the powder of the polyorganosiloxane-containing-rubber-grafted polymer is preferably 0.0001 ppm to 110 ppm, more preferably 0.0001 ppm to 90 ppm, and even more preferably 0.0001 ppm to 60 ppm. If the content is 0.0001 ppm to 110 ppm, satisfactory heat and moisture resistance and aging resistance can be secured without deteriorating the polycarbonate resin, the polyester resin, or the like.

The content of polyorganosiloxane is preferably 5 mass% to 90 mass%, more preferably 5 mass% to 70 mass%, and even more preferably 7 mass% to 50 mass% with respect to 100 mass% of the polyorganosiloxane-containing-rubber-grafted polymer.

The content of polyorganosiloxane is preferably 5 mass% to 90 mass% with respect to 100 mass% of the polyorganosiloxane-containing-rubber-grafted polymer.

The content of the phosphorus element is preferably 30 ppm to 3,000 ppm, more preferably 30 ppm to 2,000 ppm, even more preferably 30 ppm to 1,200 ppm. If the content of the phosphorus element is preferably 30 ppm to 3,000 ppm, when the content of phosphorus element is used in a polycarbonate resin or a polyester resin, satisfactory heat and moisture resistance and flame resistance can be secured without deteriorating the resins.

In the range of the above conditions, satisfactory heat and moisture resistance and flame retardance can be secured without deteriorating the polycarbonate resin or the polyester resin. The content of a sulfur element described herein is proportional to the amount of the sulfate ions and the sulfonate ions included in 100 g of the solid content of the polyorganosiloxane-containing-rubber-grafted latex. The content of the phosphorus element described herein is proportional to the content of the phosphorus element included in the solid content of the polyorganosiloxane-containing-rubber-graft latex.

In the content of the sulfur element in the powder of the polyorganosiloxane-containing-rubber-grafted polymer, a proportion occupied by the sulfonic acid compound used when the polyorganosiloxane is polymerized or in the graft polymerization is large. Therefore, the content of the emulsifier including sulfur is preferably 0.0001 ppm to 80 ppm in terms of sulfur, and the content of the sulfur element in the powder of the polyorganosiloxane-containing-rubber-grafted polymer is even more preferably 0.0001 ppm to 50 ppm. The content of the emulsifier including sulfur is preferably 0.0001 ppm to 50 ppm in terms of sulfur, more preferably 0.0001 ppm to 25 ppm, and most preferably 0.0001 ppm to 1 ppm. The detected content of the phosphorus element in the powder of the polyorganosiloxane-containing-rubber-grafted polymer is more preferably 30 ppm to 2,000 ppm, even more preferably 30 ppm to 1,200 ppm, and most preferably 30 ppm to 750 ppm. The content of polyorganosiloxane in the powder of the polyorganosiloxane-containing-rubber-grafted polymer is even more preferably 30 mass% to 85 mass%.

<Resin composition>

The resin composition of the present invention includes the present powder and a resin.

The resin used in the present invention is one or more selected from a thermoplastic resin, a thermoplastic elastomer, and a curable resin.

Examples of the thermoplastic resin include an olefin resin such as polypropylene (PP) and polyethylene (PE); a styrene (St) resin such as polystyrene (PS), high impact polystyrene (HIPS), a (meth)acrylate-styrene copolymer (MS), a styrene-acrylonitrile copolymer (SAN), a styrene-maleic anhydride copolymer (SMA), an acrylonitrile-butadiene-styrene copolymer (ABS), an acrylic ester-styrene-acrylonitrile copolymer (ASA), and an acrylonitrile-ethylene-propylene rubber-styrene copolymer (AES); an acrylic (Ac) resin such as polymethyl methacrylate (PMMA); a PC resin; a PEs resin such as a polyamide (PA) resin, a polyethylene terephthalate (PET), and polybutylene terephthalate (PBT); engineering plastics such as a (modified) polyphenylene ether ((m-)PPE) resin, a polyoxymethylene (POM) resin, a polysulfone (PSO) resin, a polyarylate (PAr) resin, and a polyphenylene (PPS) resin; a thermoplastic polyurethane (PU) resin; a polymer alloy such as an alloy of PC resin such as PC/ABS and a St-based resin, an alloy of PVC-based resin such as PVC/ABS and a St-based resin, an alloy of a PA resin such as PA/ABS and a St-based resin, an alloy of PA resin and TPE, an alloy of a PA resin such as PA/PP and a polyolefin-based resin, an alloy of PC resin such as PC/PBT and PEs resin, an alloy between olefin resins such as a polyolefin-based resin/TPE and PP/PE, an alloy between PPE resins such as PPE/HIPS, PPE/PBT, and PPE/PA, and an alloy of a PVC-based resin such as PVC/PMMA and an Ac-based resin; and a PVC resin such as a full hard vinyl chloride resin, a semi-hard vinyl chloride resin, and a soft vinyl chloride resin.

Among these, a PC resin, a PA resin, a PET resin, a PBT resin, a (m-)PPE resin, a POM resin, a PU resin, an alloy of a PC resin such as PC/ABS and a St-based resin, an alloy of a PA resin such as PA/ABS and a St-based resin, an alloy of a PA resin and TPE, an alloy of a PA resin such as PA/PP and a polyolefin-based resin, an alloy of a PC resin such as PC/PBT and a PEs resin, an alloy between PPE-based resins such as PPE/PBT and PPE/PA are preferable, and a PC resin is more preferable.

Examples of the thermoplastic elastomer include a styrene-based elastomer, an olefin-based elastomer, a vinyl chloride-based elastomer, a urethane-based elastomer, a polyester-based elastomer, a polyamide-based elastomer, a fluorine-based elastomer, 1,2-polybutadiene, and trans 1,4-polyisoprene.

Among these, a urethane-based elastomer, a polyester-based elastomer, and a polyamide-based elastomer are preferable.

The content of the present powder in the thermoplastic resin composition or the thermoplastic elastomer composition (100 mass%) is preferably 0.5 mass% to 45 mass% and more preferably 0.5 mass% to 35 mass%.

If the content of the present powder in the thermoplastic resin composition or the thermoplastic elastomer composition (100 mass%) is 0.5 mass% or more, the impact resistance of the obtained molded object is satisfactory, and if the content thereof is 45 mass% or less, the original characteristics, impact resistance and surface external appearance of the thermoplastic resin or the thermoplastic elastomer are not impaired.

**EP 3 626 780 A1**

Examples of the method for preparing a resin composition when the matrix component is a thermoplastic resin or a thermoplastic elastomer (hereinafter, also referred to as a "thermoplastic resin composition") include a method for mixing the present powder and a powder of the thermoplastic resin or the thermoplastic elastomer with a Henschel mixer, a tumbler, or the like, and melting and mixing the combined powder with an extruder, a kneader, a mixer, and the like and a method for sequentially mixing the remainders with a thermoplastic resin or a thermoplastic elastomer which is melted in advance.

The thermoplastic resin composition can contain various additives as long as it does not depart from the object of the present invention.

Examples of the additives include a stabilizer such as a phenol-based stabilizer, a phosphorus-based stabilizer, an ultraviolet absorbing agent, an amine-based light stabilizers; a phosphorous-based, bromine-based, silicone-based, or organometallic flame retardant; a modifier for providing various physical properties such as hydrolysis resistance; a filler such as titanium oxide and talc; a pigment; and a plasticizer.

Examples of the method for molding a thermoplastic resin composition include a method for molding a thermoplastic resin composition or a mixture of the present powder and a thermoplastic resin with an injection molding machine.

Examples of the curable resin include an epoxy resin, a phenol resin, an unsaturated polyester resin, a melamine resin, and a urea resin. Among these, an epoxy resin is preferable because the epoxy resin has excellent electrical characteristics and is suitable for semiconductor encapsulation. These can be used singly or two or more kinds thereof can be used in combination. The curable resin can be classified into a thermosetting resin and a photocurable resin, and any of them may be used.

Examples of the epoxy resin include a dicyclopentadiene type, a cresol novolak type, a phenol novolak type, a bisphenol type, and a biphenyl type. These can be used singly or two or more kinds thereof can be used in combination. As the epoxy resin, since the dispersibility of the present powder becomes satisfactory, a solid epoxy resin is preferable. Examples of the epoxy resin curing agent include phenolic curing agents such as a phenol novolak resin and a cresol novolak resin; an amine-based curing agent; and an acid anhydride-based curing agent. These can be used singly or two or more kinds thereof can be used in combination. The usage amount of the curing agent is preferably a stoichiometric amount of the epoxy group.

Examples of the phenol resin include a resol type phenol resin and a novolak type phenol resin. The phenol resin may be modified with drying oil, a xylene resin, a melamine resin, or the like. As a phenol resin, since the dispersibility of the present powder becomes satisfactory, a solid phenol resin is preferable. When the phenol resin is a novolak type phenol resin, a polyamine such as hexamine, an epoxy resin, an isocyanate compound, a polyformaldehyde compound, a resol type phenol resin, or the like is used in combination as a curing agent.

Examples of the unsaturated polyester resin include those obtained by reacting a saturated dicarboxylic acid such as an isophthalic acid, an orthophthalic acid, a phthalic anhydride, a succinic acid, an adipic acid, and a sebacic acid with polyhydric alcohol such as ethylene glycol, dipropylene glycol, 1,3-butanediol, 1,6-hexanediol, neopentyl glycol, and hydrogenated bisphenol A, and an unsaturated dicarboxylic acid such as a maleic acid, maleic anhydride, a fumaric acid, an itaconic acid, and endomethylenetetrahydrophthalic anhydride at 180°C to 250°C. The unsaturated polyester resin may copolymerize a monomer copolymerizable with the unsaturated dicarboxylic acid. Examples of the monomer copolymerizable with the unsaturated dicarboxylic acid include styrene, t-butylstyrene, divinylbenzene, diallyl phthalate, vinyl toluene, and (meth)acrylates.

The content ratio of the present powder in the curable resin composition (100 mass%) is preferably 0.5 mass% to 45 mass% and more preferably 0.5 mass% to 35 mass%. If the content ratio of the present powder in the curable resin composition (100 mass%) is 0.5 mass% or more, the impact resistance of the obtained molded object becomes satisfactory, and if the content ratio is 45 mass% or less, the original characteristics, impact resistance, and surface external appearance of the curable resin are not deteriorated.

A resin composition when the matrix component is a curable resin (hereinafter, referred to as a "curable resin composition") can contain various additives without departing from the object of the present invention. Examples of additives include various curing accelerators; a release agent such as silicone oil, natural waxes, and synthetic waxes; a filler such as crystalline silica, fused silica, calcium silicate, and alumina; a fiber such as glass fibers and carbon fibers; a flame retardant such as antimony trioxide; a halogen trapping agent such as hydrotalcites and rare earth oxide; a colorant such as carbon black and bengara; and a silane coupling agent.

Examples of the method for preparing the curable resin composition include a method for mixing each component in a solution state, a method for melting and mixing each component using a mixing roll or a kneader, cooling the components, and then performing crushing or tableting. Examples of the method for molding a curable resin composition include transfer molding, sheet compound molding, and bulk molding. Moreover, when a curable resin composition is a solution state, the curable resin composition can be applied as an adhesive agent.

The molded object of the present invention is useful as a housing for OA equipment such as a personal computer, a printer, and a copy machine; a housing for home appliances such as a liquid crystal television and a DVD player; an automobile exterior material such as a mirror housing; and an automotive interior material such as an instrument panel.

Moreover, since impact resistance and hydrolysis resistance are excellent, the molded object of the present invention is particularly useful for applications using a recycled material such as OA equipment.

Examples

Hereinafter, the present invention is described more specifically with reference to examples. In the following, "part" and "%" indicate "part by mass" and "mass%", respectively.

Various physical properties shown in the examples were evaluated by the following methods.

(1) Solid content

A rubber latex including polyorganosiloxane and a latex including a polyorganosiloxane-containing-rubber-grafted polymer are dried for 30 minutes with a hot air dryer at 180°C, and the solid content was calculated by the following equation.

$$\text{Solid content [\%]} = (\text{Mass of residue after drying for 30 minutes at 180°C)} / (\text{Mass of latex before drying}) \times 100$$

(2) Determination of sulfate ions and sulfonate ions

A rubber latex including polyorganosiloxane and a latex including a polyorganosiloxane-containing-rubber-grafted polymer were measured on a vessel liner and dried for three hours in a hot air dryer at 105°C to completely remove moisture. 0.05 g of the solid content after the moisture removal was completely burned by a sample combustion device (manufactured by Mitsubishi Chemical Corporation, trade name: QF-02), the generated gas was absorbed in 20 ml of 0.3% hydrogen peroxide to obtain a sample, and the total amount of the sulfate ions and the sulfonate ions was measured by using an ion chromatograph (produced by Nippon Dionex Co., Ltd., trade name: IC-20 type, separation column: IonPac AS12A).

The calibration curve was created as a point of $SO_4^{2-}$: 20 ppm by using a sodium sulfate standard solution (produced by Kishida Chemical Co., Ltd., sulfate ion standard solution for ion chromatography, $SO_4^{2-}$: 1,000 mg/L).

From the concentration determined by ion chromatography, the total amount of sulfate ions and sulfonate ions included in 100 g of the solid contents of the rubber latex including polyorganosiloxane and the polyorganosiloxane-containing-rubber-grafted polymer was calculated by the following formula.

The amount of the sulfate ions in the powder [ppm] = {($SO_4^{2-}$-concentration in sample solution [ppm] - $SO_4^{2-}$-concentration in blank solution [ppm]) $\times$ amount of hydrogen peroxide [ml] }/amount of powder sample [g]

$$\text{Amount of sulfate ion included in 100 g of powder [mmol]} = \text{Amount of sulfate ion in powder [ppm]}/10/96$$

The number of moles of sulfate ions and the number of moles of sulfuric acid salt were treated as the same, and the amount of sulfuric acid salt [mmol] was calculated from the amount of sulfate ions [mmol] included in 100 g of the powder.

(3) Quantification of phosphorus element and sulfur element

A rubber latex including polyorganosiloxane and a latex including the polyorganosiloxane-containing-rubber-grafted polymer were measured on a vessel liner and dried for three hours in a hot air dryer at 105°C to completely remove the moisture. 0.25 g of the solid content after moisture removal was weighed in a decomposition container, 8 ml of nitric acid was added, and decomposition was performed by microwaves (wet decomposition). After cooling, 2 ml of hydrofluoric acid was added, a treatment is performed with microwaves again, and diluted to 50 ml with distilled water (dissolved at a constant volume) to make the test solution. With respect to the test solution, the contents of the phosphorus element and the sulfur element are quantified by using an ICP spectroscopic analyzer (IRIS Interpid IIXSP: produced by Thermo Fisher Scientific Inc.).

(4) Determination of emulsifier including sulfur

(Extraction operation)

1 g of the rubber latex including polyorganosiloxane and the latex include polyorganosiloxane-containing-rubber-grafted polymer were weighed into a 9 mL sample tube, and 8 mL of methanol (reagent special grade, Wako Pure Chemical Corporation) was added with a whole pipette. This is ultrasonically extracted at room temperature for two hours with an ultrasonic cleaner (Bransonic tabletop ultrasonic cleaner 5510, produced by Emerson Japan, Ltd.). 2 mL of this extract solution was filtered through a 0.2 $\mu$L PTEF filter (Tomsic Ltd.) and subjected to LC/MS measurement.

(LC/MS measurement conditions)

Equipment: UFLC LCMS-2020 (produced by Shimadzu Corporation)
Detector: UV 230 nm, ESI (-)
Column: SHISEIDO Capcell Pak MG3 3 $\mu$m, 2.0 mmID $\times$ 150 mm
Constant temperature tank: 40°C
Injection amount: 3$\mu$L methanol extraction solution
Flow rate: 0.25ml/min
Mobile phase

    A: 10 mM ammonium acetate aqueous solution,
    B: Acetonitrile (reagent special grade, Wako Pure Chemical Corporation)

$$A / B = 40 / 60$$

Nebulizer gas: 1.5 mL/min
ESI voltage: 1.10 KV
Standard: NEOPELEX G15 (KAO Corporation) assumed as 16% aqueous solution of active ingredient

(Quantitative method)

Since NEOPELEX G15 includes C10 to C13 components in the alkyl group of sodium alkylbenzene sulfonate, these areas were added together to calculate the area. Specifically, in the UV 230 nm detection, the areas of components with a retention time of two to eight minutes were added together, and the effective component amount was calculated from the area values. The molecular weight of dodecylbenzenesulfonic acid (C12) was used when the S concentration was calculated derived from the emulsifier from the calculated amount of the active ingredient.

(5) Charpy impact strength

Charpy impact strength of the test piece (length: 80.0 mm, width: 10.0 mm, thickness: 4 mm, with V notch) at the temperatures of 23°C and -30°C in accordance with JIS K7111-1/1 eA by using a test piece of the resin composition was measured.

(6) Melt flow rate (MFR)

Pellets of the resin composition were dried for 12 hours at 80°C, and then melted under a measurement temperature of 300°C, preheating for five minutes, and a load of 1.20 kgf, a melt indexer (produced by Techno Seven Co., Ltd., trade name: L-243-1531 type) was used, and the measurement was performed according to JIS K7210.

(7) Heat and moisture resistance

The pellets of the resin composition were wet-heated for 60 hours under 100% RH at 120°C by using a pressure cooker (trade name: PC304RIII type) produced by HIRAYAMA Manufacturing Corporation. Subsequently, the wet-heated sample was dried at 80°C for 12 hours, and then MFR was measured according to JIS K7210.

ΔMFR was calculated according to the following formula to evaluate hydrolysis resistance. The smaller the value of ΔMFR, the better the hydrolysis resistance.

$$\Delta MFR = (MFR\ after\ wet\ heat\ treatment) - (MFR\ before\ wet\ heat\ treatment)$$

(8) Heat aging resistance

A molded object of the resin composition (flat sheet test piece: a length of 100 mm, a width of 50 mm, and a thickness of 2 mm) was heat-treated in a gear oven (forced circulation type thermal aging tester) at 120°C for 200 hours, and the YI value was measured by the reflected light measurement method under the conditions of a C light source and a 2-degree visual field by using a spectral color difference meter (trade name "SE2000" produced by Nippon Denshoku Industries Co., Ltd.) according to JIS K7105. The ΔYI value was calculated by the following formula to evaluate the heat aging resistance. The smaller the value of ΔYI, the better the heat aging resistance.

$$\Delta YI = (YI\ after\ heat\ treatment) - (YI\ before\ heat\ treatment)$$

(9) Flame resistance

1/16 inch thick combustion rod-type molded objects of the resin composition were produced and placed in an environment of a temperature of 23°C and a humidity of 50% for 48 hours, and a UL94 test was performed.
Among the five test pieces, the number of flammable falling objects that ignite absorbent cotton was counted. The smaller the number, the better the flame retardance.

(Reference Example 1) Production of polyorganosiloxane (S-0) latex

96.0 parts of hexamethylcyclotetrasiloxane (D4), 2.0 parts of γ-methacryloyloxypropyldimethoxymethylsilane (DSMA), and 2.0 parts of tetraethoxysilane (TEOS) were mixed to obtain 100 parts of a siloxane mixture. A solution obtained by dissolving 1.0 part of PHOSPHANOL RS-610Na (sodium polyoxyethylene alkyl ether phosphate (PEAPNa)) produced by Toho Chemical Industry Co., Ltd. to 66.2 parts of deionized water was added to this, and while being heated at 85°C, the mixture was stirred for five minutes at 20,000 rpm in Ultra turrax. Next, the mixture was passed twice through a homogenizer at a pressure of 20 MPa to obtain a siloxane latex.
A solution obtained by dissolving 4.0 parts of PHOSPHANOL RS-610 (polyoxyethylene alkyl ether phosphate (PEAPH)) produced by Toho Chemical Industry Co., Ltd. to 200.0 parts of deionized water was added to a separable flask equipped with a cooling pipe, a thermometer, and a stirrer, and was heated to 85°C. Next, the above siloxane latex was introduced, 0.4 parts of phosphoric acid ($H_3PO_4$) was added as a catalyst, to obtain a siloxane latex composition.
In a state in which the obtained siloxane latex composition was heated to 85°C, the temperature was maintained for nine hours, to polymerize the organosiloxane.
After the polymerization, the polymer was cooled and neutralized to pH 7.0 by using 5% aqueous sodium hydroxide to obtain a polyorganosiloxane (S-0) latex. The solid content of the polyorganosiloxane (S-0) latex was 0.5 mass% and did not polymerize.

[Example 1]

(Production Example 1) Production of polyorganosiloxane (S-1) latex

96.0 parts of hexamethylcyclotetrasiloxane (D3), 2.0 parts of γ-methacryloyloxypropyldimethoxymethylsilane (DSMA), and 2.0 parts of tetraethoxysilane (TEOS) were mixed to obtain 100 parts of a siloxane mixture. A solution obtained by dissolving 1.0 part of PHOSPHANOL RS-610Na (sodium polyoxyethylene alkyl ether phosphate (PEAPNa)) produced by Toho Chemical Industry Co., Ltd. in 66.2 parts of deionized water was added to this and was stirred at 20,000 rpm for five minutes in Ultra turrax while being heated at 85°C, to obtain a siloxane latex.
A solution obtained by dissolving 4.0 parts of PHOSPHANOL RS-610 (polyoxyethylene alkyl ether phosphate (PEAPH)) produced by Toho Chemical Industry Co., Ltd. in 200.0 parts of deionized water was added to a separable flask equipped with a cooling pipe, a thermometer, and a stirrer, and was heated to 85°C. Next, the above siloxane latex was introduced, 0.4 parts of phosphoric acid ($H_3PO_4$) was added as a catalyst, to obtain a siloxane latex composition.
In a state in which the obtained siloxane latex composition was heated to 85°C, the temperature was maintained for nine hours, to polymerize the organosiloxane.

After the polymerization, the polymer was cooled and neutralized to pH 7.0 by using 5% aqueous sodium hydroxide to obtain a polyorganosiloxane (S-1) latex.

The solid content of the polyorganosiloxane (S-1) latex was 24.8%, and the polymerization rate in terms of solid content was 87%.

The total amount of the sulfate ion and the sulfonate ion included in 100 g of the solid content of the polyorganosiloxane (S-1) latex was 1.0 mmol or less, and the content of the phosphorus element was 3340 ppm, and the content of the sulfur element was 5 ppm or less.

[Example 2]

(Production Example 2) Production of latex of polyorganosiloxane (S-2)

96.0 parts of dihydroxy-terminated polydimethylsiloxane (DHPDMS) having an average molecular weight of 2,000, 2.0 parts of γ-methacryloyloxypropyldimethoxymethylsilane (DSMA), and 2.0 parts of tetraethoxysilane (TEOS) were mixed to obtain 100 parts of a siloxane mixture. A solution obtained by dissolving 3.0 part of PHOSPHANOL RS-610 (polyoxyethylene alkyl ether phosphoric acid (PEAPH) produced by Toho Chemical Industry Co., Ltd. in 300 parts of deionized water was added to this and was stirred at 18,000 rpm for three minutes in Ultra turrax. Next, the mixture was passed through a homogenizer at a pressure of 20 MPa to obtain a siloxane latex.

The above siloxane latex was introduced to a separable flask equipped with a cooling pipe, a thermometer, and a stirrer, the temperature was maintained for five hours in a state in which heating was performed at 80°C to polymerize the organosiloxane. After the polymerization, the polymer was cooled and neutralized to pH 7.8 by using 5% aqueous sodium hydroxide to obtain a polyorganosiloxane (S-2) latex. The solid content of the polyorganosiloxane (S-2) latex was 20.6%, and the polymerization rate in terms of solid content was 82%. The total amount of the sulfate ions and the sulfonate ions included in 100 g of the solid content of the polyorganosiloxane (S-2) latex was 1.0 mmol or less, the content of the phosphorus element was 1,245 ppm, and the content of the sulfur element was 5 ppm or less.

[Comparative Example 1]

(Production Example 3) Production of polyorganosiloxane (S-3) latex

97.5 parts of octamethylcyclotetrasiloxane (D4), 0.5 parts of γ-methacryloyloxypropyldimethoxymethylsilane (DSMA), and 2.0 parts of tetraethoxysilane (TEOS) were mixed to obtain 100 parts of a siloxane mixture. A solution obtained by dissolving 0.67 parts of sodium dodecylbenzenesulfonate (DBSNa) in 233 parts of deionized water was added to this, and the mixture was stirred for five minutes at 10,000 rpm with a homomixer. Next, the mixture was passed twice through a homogenizer at a pressure of 20 MPa to obtain a siloxane latex.

The above siloxane latex was introduced to a separable flask equipped with a cooling pipe, a thermometer, and a stirrer, and 0.2 parts of dodecylbenzenesulfonic acid (DBSH) was further added as a catalyst to obtain a siloxane latex composition. Next, in a state in which the obtained siloxane latex composition was heated to 80°C, the temperature was maintained for eight hours to polymerize the organosiloxane.

After the polymerization, the polymer was cooled and neutralized to pH 7.0 by using a 5% sodium hydroxide aqueous solution to obtain a polyorganosiloxane (S-3) latex.

The solid content of the polyorganosiloxane (S-3) latex was 26.5%, and the polymerization rate in terms of solid content was 88%.

The total amount of the sulfate ions and the sulfonate ions included in 100 g of the solid content of the polyorganosiloxane (S-3) latex was 2.5 mmol, the content of the phosphorus element was 5 ppm or less, and the content of the sulfur element was 815 ppm.

[Comparative Example 2]

(Production Example 4) Production of polyorganosiloxane (S-4) latex

96.0 parts of octamethylcyclotetrasiloxane (D4), 2.0 parts of γ-methacryloyloxypropyldimethoxymethylsilane (DSMA), and 2.0 parts of tetraethoxysilane (TEOS) were mixed to obtain 100 parts of a siloxane mixture. A solution obtained by dissolving 1.0 part of sodium dodecylbenzenesulfonate (DBSNa) in 150 parts of deionized water was added to this, and the mixture was stirred for five minutes at 10,000 rpm with a homomixer. Next, the mixture was passed twice through a homogenizer at a pressure of 20 MPa to obtain a siloxane latex.

The above siloxane latex was introduced to a separable flask equipped with a cooling pipe, a thermometer, and a stirrer and was heated to the temperature of 80°C, and then a mixture of 0.20 parts of sulfuric acid and 49.8 parts of distilled water was continuously added over three minutes. The state in which the mixture was heated to 80°C was maintained for seven hours for a polymerization reaction, the mixture was cooled to room temperature (25°C), the obtained reaction solution was preserved for six hours at room temperature (25°C). Thereafter, a 5% aqueous sodium hydroxide solution was added to neutralize the reaction solution to pH 7.0 to obtain a polyorganosiloxane (S-4) latex.

The solid content of the polyorganosiloxane (S-4) latex was 32.3%, and the polymerization rate in terms of solid content was 96%.

The total amount of the sulfate ions and the sulfonate ions included in 100 g of the solid content of the polyorganosiloxane (S-4) latex was 4.9 mmol, the content of the phosphorus element was 5 ppm or less, and the content of the sulfur element was 936 ppm.

[Table 1]

| Polyorganosiloxane (Latex) | | | Example 1 | Example 2 | Comparative Example 1 | Comparative Example 2 |
|---|---|---|---|---|---|---|
| | | | Production Example 1 | Production Example 2 | Production Example 3 | Production Example 4 |
| | | | S-1 | S-2 | S-3 | S-4 |
| Monomer (siloxane) [part] | D3 | | 96 | | | |
| | D4 | | | | 97.5 | 96 |
| | DHPDMS | | | 96 | | |
| | DSMA | | 2 | 2 | 0.5 | 2 |
| | TEOS | | 2 | 2 | 2 | 2 |
| Emulsifier [part] | PEAPNa | | 1 | | | |
| | DBSNa | | | | 0.67 | 1 |
| Acid catalyst [part] | PEAPH | | 4 | 3 | | |
| | DBSH | | | | 0.2 | |
| | $H_3PO_4$ | | 0.4 | | | |
| | $H_2SO_4$ | | | | | 0.2 |
| Solid content [%] | | | 24.8 | 20.6 | 26.5 | 32.3 |
| Total amount of sulfate ions and sulfonate ions [mmol/100 g] | | | ≤1.0 | ≤1.0 | 2.5 | 4.9 |
| Phosphorus element [ppm] | | | 3340 | 1245 | ≤5 | ≤5 |
| Sulfur element [ppm] | | | ≤5 | ≤5 | 815 | 936 |

The abbreviations listed in Table 1 indicate the following.

"D3": Hexamethylcyclotrisiloxane

"D4": Octamethylcyclotrisiloxane

"DHPDMS": Dihydroxy-terminated polydimethylsiloxane

"DSMA": γ-Methacryloyloxypropyldimethoxymethylsilane

"TEOS": Tetraethoxysilane

"PEAPNa": Sodium polyoxyethylene alkyl ether phosphate

"DBSNa": Sodium dodecylbenzenesulfonate

"PEAPH": Polyoxyethylene alkyl ether phosphate

"DBSH": Dodecylbenzenesulfonic acid

[Example 3]

(Production Example 5) Production of polyorganosiloxane-containing-rubber-grafted polymer (G-1)

115.4 parts (30.0 parts as polyorganosiloxane (S-1)) of the polyorganosiloxane (S-1) latex obtained in Production Example 1 was introduced to a separable flask equipped with a cooling pipe, a thermometer, a nitrogen-introduction tube, and a stirrer. Further, 221.7 parts of deionized water, 56.7 parts of n-butyl acrylate (BA), 1.3 parts of allyl methacrylate (AMA) and 0.5 parts of diisopropylbenzene hydroperoxide (CB) were added and mixed.

The atmosphere in the flask was replaced with nitrogen by causing a nitrogen stream to pass through the separable flask, and the temperature was raised to 50°C. When the liquid temperature reaches 50°C, the mixture of 0.001 parts of ferrous sulfate (Fe), 0.003 parts of ethylenediaminetetraacetic acid disodium salt (EDTA), 0.24 part of sodium formaldehyde sulfoxylate (SFS), and 5.0 parts of deionized water was added to initiate the polymerization. Thereafter, the internal temperature was heated to 65°C and maintained at 65°C for one hour, and then the polymerization was completed to obtain a composite rubber latex.

The mixture 10.5 parts of methyl methacrylate (MMA), 0.5 parts of n-butyl acrylate (BA), and 0.06 parts of t-butyl hydroperoxide (tBH) (graft monomer component and organic peroxide) was added dropwise to the obtained composite rubber latex at 65°C over 20 minutes. Thereafter, the polymerization was completed by preservation at 65°C for one hour to obtain a polyorganosiloxane-containing-rubber-grafted polymer (G-1) latex.

The solid content of the polyorganosiloxane-containing-rubber-graft polymer (G-1) latex was 24.8%.

The total amount of the sulfate ions and the sulfonate ions included in 100 g of the solid content of the polyorganosiloxane-containing-rubber-grafted polymer (G-1) latex was 2.0 mmol, the content of the phosphorus element was 1002 ppm, and the content of the sulfur element was 650 ppm.

Next, 500 parts of an aqueous solution having a calcium acetate concentration of 1 mass% was heated to 60°C, and while stirring, 340 parts of a polyorganosiloxane-containing-rubber-grafted polymer (G-1) latex was added dropwise to the aqueous solution, to be coagulated. The obtained polyorganosiloxane-containing-rubber-grafted polymer (G-1) was filtered and dehydrated. Further, after water in the amount of 10 times was added to 100 parts of the polyorganosiloxane-containing-rubber-grafted polymer, the mixture was washed for 10 minutes in a flask equipped with a stirrer, filtered, and dehydrated. This operation was repeated twice, and drying was performed, to obtain a polyorganosiloxane-containing-rubber-grafted polymer (G-1) powder. The evaluation results are shown in Tables 3 and 4.

[Example 4]

(Production Example 6) Production of polyorganosiloxane-containing-rubber-grafted polymer (G-2)

150 parts of the polyorganosiloxane (S-2) latex obtained in Production Example 2 (31.0 parts as polyorganosiloxane (S-2)) was introduced to a separable flask equipped with a cooling pipe, a thermometer, a nitrogen-introduction tube, and a stirrer. Further, 168 parts of deionized water, 56.7 parts of n-butyl acrylate (BA), and 1.3 parts of allyl methacrylate (AMA) were added and mixed. The atmosphere in the flask was replaced with nitrogen by causing a nitrogen stream to pass through the separable flask, and the temperature was raised to 50°C. When the liquid temperature reached 50°C, an aqueous solution obtained by dissolving 0.15 parts of 2,2'-azobis[N-(2-carboxymethyl)-2-methylpropionamidine] hydrate (produced by Wako Pure Chemical Corporation, trade name: VA-057) in 10 parts of distilled water was added to initiate the radical polymerization. Thereafter, the internal temperature was heated to 65°C and maintained at 65°C for one hour, and then the polymerization was completed to obtain a composite rubber latex.

An aqueous solution obtained by dissolving 0.15 parts of 2,2'-azobis[N-(2-carboxymethyl)-2-methylpropionamidine]hydrate (produced by Wako Pure Chemical Corporation, trade name; VA-057) in 10 parts of distilled water was added to the obtained composite rubber latex and was preserved for five minutes, and a mixture (graft monomer component) of 10.5 parts of methyl methacrylate (MMA) and 0.5 parts of n-butyl acrylate (BA) was added dropwise at 65°C over 60 minutes. Thereafter, the polymerization was completed by preservation at 65°C for one hour to obtain a polyorganosiloxane-containing-rubber-grafted polymer (G-2) latex. The solid content of the polyorganosiloxane-containing-rubber-grafted polymer (G-2) latex was 24.5%. The total amount of the sulfate ions and the sulfonate ions included in 100 g of the solid content of the polyorganosiloxane-containing-rubber-grafted polymer (G-2) latex was less than 1.0 mmol, the content of the phosphorus element was 385 ppm, and the content of the sulfur element was less than 7 ppm.

Next, 500 parts of an aqueous solution in which the concentration of calcium acetate was 1 mass% was heated to a temperature of 60°C, and while stirring, 400 parts of a polyorganosiloxane-containing-rubber-grafted polymer (G-2) latex was added dropwise to the aqueous solution, to be coagulated. The obtained polyorganosiloxane-containing-rubber-grafted polymer (G-2) was filtered and dehydrated. Further, after water in the amount of 10 times was added to 100 parts of the polyorganosiloxane-containing-rubber-grafted polymer, the mixture was washed for 10 minutes in a flask equipped with a stirrer, filtered, and dehydrated. This operation was repeated twice and then dried to obtain a polyorganosiloxane-containing-rubber-grafted polymer (G-2) powder. The contents of the sulfur element derived from dodecylbenzenesulfonic acid included in the polyorganosiloxane-containing-rubber-grafted polymer (G-2), the phosphorus element, and the sulfur element are presented in Table 2.

[Comparative Examples 3 to 4]

(Production Examples 7 to 8) Production of polyorganosiloxane-containing-rubber-grafted polymers (G-3 to G-4)

Types of polyorganosiloxane and emulsifier used are presented in Table 2. Otherwise, in the same manner as in Example 2, polyorganosiloxane-containing-rubber-grafted polymer (G-3 to G-4) latexes and polyorganosiloxane-containing-rubber-grafted polymer were obtained. The total amount of the sulfate ions and the sulfonate ions, the content of the phosphorus element, and the content of the sulfur element included in 100 g of the solid content of the latex are presented in Table 2.

[Table 2]

| silicone-based polymer -containing vinyl polymer (Latex) | | | Example 3 | Example 4 | Comparative Example 3 | Comparative Example 4 | Comparative Example 5 |
|---|---|---|---|---|---|---|---|
| | | | Production Example 5 | Production Example 6 | Production Example 7 | Production Example 8 | Production Example 9 |
| | | | G-1 | G-2 | G-3 | G-4 | G-5 |
| Polyorganosiloxane (solid content) | | Types | S-1 | S-2 | S-3 | S-4 | S-4 |
| | | Amount [part] | 30 | 31 | 30 | 30 | 10 |
| Alkyl (meth)acrylate component and polymerization initiator [part] | | BA | 56.7 | 56.7 | 56.7 | 56.7 | 59.1 |
| | | AMA | 1.3 | 1.3 | 1.3 | 1.3 | 0.9 |
| | | CB | 0.5 | | | 0.5 | 0.5 | |
| | | VA-057 | | 0.15 | | | 0.15 |
| Reducing agent or the like [part] | | Fe | 0.001 | | 0.001 | 0.001 | 0.001 |
| | | EDTA | 0.003 | | 0.003 | 0.003 | 0.003 |
| | | SFS | 0.24 | | 0.24 | 0.24 | 0.12 |
| Polymerization initiator [part] | | VA-057 | | 0.15 | | | |
| Graft monomer component and organic peroxide [part] | | MMA | 10.5 | 10.5 | 10.5 | 10.5 | 28.5 |
| | | BA | 0.5 | 0.5 | 0.5 | 0.5 | 1.5 |
| | | tBH | 0.06 | | 0.06 | 0.06 | 0.14 |
| Solid content [%] | | | 24.8 | 24.5 | 24.3 | 24.5 | 30.5 |
| Polyorganosiloxane-containing-rubber-grafted latex | | Total content of sulfate ions and sulfonate ions [mmol/100 g] | 2 | <1.0 | 2.8 | 3.5 | 1.4 |
| | | Phosphorus element [ppm] | 1002 | 385 | <5 | ≦5 | <5 |
| | | Sulfur element [ppm] | 650 | <7 | 908 | 944 | 454 |

EP 3 626 780 A1

| silicone-based polymer -containing vinyl polymer (Latex) | | Example 3 | Example 4 | Comparative Example 3 | Comparative Example 4 | Comparative Example 5 |
|---|---|---|---|---|---|---|
| | | Production Example 5 | Production Example 6 | Production Example 7 | Production Example 8 | Production Example 9 |
| | | G-1 | G-2 | G-3 | G-4 | G-5 |
| Polyorganosiloxane-containing-rubber-grafted polymer | Amount of S derived from DBS [ppm] | Detection limit or less | Detection limit or less | | | 80 |
| | Calcium element [ppm] | | | | | 85 |
| | Phosphorus element [ppm] | 335 | 430 | | | <8 |
| | Sulfur element [ppm] | 50 | 23 | | | 120 |

EP 3 626 780 A1

Further, the abbreviations listed in Table 2 indicate the following.

"BA": n-butyl acrylate
"AMA": Allyl methacrylate
"MMA": Methyl methacrylate
"CB": Diisopropylbenzene hydroperoxide
"tBH": t-butyl hydroperoxide
"Fe": Ferrous sulfate
"EDTA": Ethylenediaminetetraacetic acid disodium salt
"SFS": Sodium formaldehyde sulfoxylate
" VA-057": 2,2'-azobis[N-(2-carboxymethyl)-2-methylpropionamidine]hydrate

[Comparative Example 5]

(Production Example 9) Replication of Example 27 disclosed in International Publication No. 2013/129709 (G-5)

33.56 parts (10.0 parts in terms of polymer) of latex (S-4) obtained in Production Example 3 was collected in a separable flask having a volume of 5 liters, and 200 parts of distilled water was added and mixed. Next, a mixture of 59.1 parts of n-butyl acrylate (BA) and 0.9 parts of allyl methacrylate (AMA) was added to the separable flask.

The atmosphere in the flask was replaced with nitrogen by causing a nitrogen stream to pass through the separable flask, and the temperature was raised to 50°C. When the liquid temperature reached 50°C, an aqueous solution obtained by dissolving 0.15 part of 2,2'-azobis[N-(2-carboxymethyl)-2-methylpropionamidine] hydrate (produced by Wako Pure Chemical Corporation, trade name: VA-057) in 10 parts of distilled water was added to initiate the radical polymerization. After the liquid temperature was decreased to 65°C, in order to complete the polymerization of the acrylate component, the liquid temperature was maintained at 65°C for one hour to obtain a composite rubber latex of polyorganosiloxane and poly n-butyl acrylate.

While the liquid temperature of the above composite rubber latex was maintained at 65°C, an aqueous solution obtained by dissolving 0.001 parts of ferrous sulfate (Fe), 0.003 parts of ethylenediaminetetraacetic acid disodium salt (EDTA), and 0.12 parts of sodium formaldehyde sulfoxylate (SFS) in 10 parts of distilled water was added to the flask. Subsequently, a mixture of 28.5 parts of methyl methacrylate (MMA), 1.5 parts of BA, and 0.14 parts of t-butyl hydroperoxide (t-BH) were added dropwise to the flask over one hour for polymerization. After the completion of the drop addition, the temperature of the solution was maintained at 60°C or higher for one hour, and was cooled to room temperature (25°C) to obtain a polyorganosiloxane-containing grafted copolymer (G-5) latex. The total amount of the sulfate ions and the sulfonate ions, the content of the phosphorus element, and the content of the sulfur element included in 100 g of the solid content of the latex are presented in Table 2.

Next, 500 parts of an aqueous solution in which the concentration of calcium acetate was 1 mass% was heated to a temperature of 60°C, and while stirring, 400 parts of a polyorganosiloxane-containing-rubber-grafted polymer (G-5) latex was added dropwise to the aqueous solution for coagulation. The obtained polyorganosiloxane-containing-rubber-grafted polymer (G-5) was filtered and dehydrated. Further, after water in the amount of 10 times was added to 100 parts of the polyorganosiloxane-containing-rubber-grafted polymer, the mixture was washed for 10 minutes in a flask equipped with a stirrer, filtered, and dehydrated. This operation was repeated twice and then dried to obtain a polyorganosiloxane-containing-rubber-grafted polymer (G-5) powder. The contents of the sulfur element, the phosphorus element, and the sulfur element derived from dodecylbenzenesulfonic acid included in the polyorganosiloxane-containing-rubber-grafted polymer (G-5) are presented in Table 2.

[Examples 5 to 6 and Comparative Examples 6 to 8]

Polyorganosiloxane-containing-rubber-grafted polymer powder and a polycarbonate-based resin (bisphenol A type polycarbonate having a viscosity average molecular weight of about 22,000) were formulated in the ratios presented in Table 3. The formulation was melt mixed at a cylinder temperature of 280°C and a screw speed of 200 rpm by using a 30 mmφ biaxial extruder (L/D = 30) to obtain a thermoplastic resin composition. Next, this thermoplastic resin composition was shaped into pellets.

The obtained pellets were dried at 80°C for 12 hours, supplied to a 100 t injection molding machine (produced by Sumitomo Heavy Industries, Ltd., trade name: SE-100DU), and injection molded at a cylinder temperature of 280°C and a mold temperature of 80°C. A test piece (with a notch) for a Charpy impact test was obtained by using a family mold according to JIS K7152. Various evaluation results using the pellets and the test pieces are provided in Table 3.

EP 3 626 780 A1

[Table 3]

| | Grafted copolymer | | PC resin (part) | Charpy impact test | | Heat and moisture resistance | Heat aging resistance |
|---|---|---|---|---|---|---|---|
| | Types | (part) | | Measurement temperature: 23°C (kJ/m$^2$) | Measurement temperature: -30°C (kJ/m$^2$) | ΔMFR (sec) | ΔYI (-) |
| Example 5 | G-1 | 5 | 95 | 67 | 54 | 2.9 | 2.7 |
| Example 6 | G-2 | 5 | 95 | 63 | 45 | 1.7 | 2.5 |
| Comparative Example 6 | G-3 | 5 | 95 | 66 | 54 | 3.3 | 3.7 |
| Comparative Example 7 | G-4 | 5 | 95 | 62 | 52 | 4.1 | 3.1 |
| Comparative Example 8 | G-5 | 5 | 95 | 66 | 39 | 2.2 | 3.5 |

[Examples 7 to 8 and Comparative Examples 9 to 11]

Polyorganosiloxane-containing-rubber-grafted polymer powder, a polycarbonate-based resin (bisphenol A type polycarbonate having a viscosity average molecular weight of about 22,000), and PTFE (produced by Mitsubishi Chemical Corporation: polytetrafluoroethylene [product name: METABLEN A-3750]), and PX200 (produced by Daihachi Chemical Industry Co., Ltd., composite phosphate ester [product name PX200]) as a flame retardant were formulated at a ratio presented in Table 4. The formulation was melt mixed at a cylinder temperature of 280°C and a screw speed of 200 rpm by using a 30 mmφ biaxial extruder (L/D = 30) to obtain a thermoplastic resin composition. Next, this thermoplastic resin composition was shaped into pellets.

The obtained pellets were dried at 80°C for 12 hours, supplied to a 100 t injection molding machine (trade name: SE-100DU, produced by Sumitomo Heavy Industries, Ltd.), and injection molded at a cylinder temperature of 280°C and a mold temperature of 80°C to produce a 1/16 inch thick combustion rod-shaped molded object. The results obtained by performing the UL94 test after placing these in an environment of a temperature of 23°C and a humidity of 50% for 48 hours are presented in Table 4.

[Table 4]

| | Grafted copolymer | | PC resin (part) | PTFE (part) | Flame retardant (part) | Flame retardance | |
|---|---|---|---|---|---|---|---|
| | Types | (part) | | A-3750 | PX200 | Total combustion time (sec) | Rank |
| Example 7 | G-1 | 5 | 89.5 | 0.5 | 5 | 16 | V-0 |
| Example 8 | G-2 | 5 | 89.5 | 0.5 | 5 | 36 | V-0 |
| Comparative Example 9 | G-3 | 5 | 89.5 | 0.5 | 5 | 49 | V-0 |
| Comparative Example 10 | G-4 | 5 | 89.5 | 0.5 | 5 | 35 | V-0 |
| Comparative Example 11 | G-5 | 5 | 89.5 | 0.5 | 5 | 25 | V-0 |

As clearly understood from Table 3, the thermoplastic resin composition of Example 5 was superior in Charpy impact strength at 23°C (room temperature) as compared with the thermoplastic resin compositions of Comparative Examples 6 to 7.

The resin composition of Example 5 had a smaller increase rate of MFR after the wet heat treatment and was superior in heat and moisture resistance as compared with the resin compositions of Comparative Examples 6 to 7. In addition, the heat aging resistance was excellent, and coloration (an increase in ΔYI value) was hardly observed after the molded object of Example 5 was subjected to the heat treatment in 120°C for 200 hours.

The thermoplastic resin composition of Example 6 was significantly superior in heat and moisture resistance and heat aging resistance as compared with Comparative Examples 6 to 7. Charpy impact strength at -30°C is slightly inferior to Comparative Examples 6 to 7, but has an excellent balance in physical properties such as impact strength, heat and moisture resistance, and heat aging resistance.

The resin composition (G-5) obtained from the replication of Example 27 in International Publication No. 2013/129709 has a small increase rate of MFR after the wet heat treatment, but did not include pentavalent phosphorus, and heat aging resistance was not excellent. And also Charpy impact strength at -30°C (low temperature) was not enough. This is because the amount of polyorganosiloxane was as small as 10 mass%. If the composition was similar to in Example 3 (Production Example 5), that is, if the amount of polyorganosiloxane was changed by 30 mass%, it is sufficiently assumed that the strength will be improved. However, in that case, since the content of the sulfur element and the amount of the sulfonic acid-based emulsifier which are the same as those of Comparative Example 4 are included, the heat and moisture resistance will be lowered.

As clearly understood from Table 4, it was clear that the resin composition of Example 7 has a short total combustion time (sec) and is superior in flame retardance as compared with the thermoplastic resin compositions of Comparative Examples 9 to 11.

The thermoplastic resin composition of Example 8 has a shorter total combustion time than Comparative Example 9 and was equivalent to Comparative Example 10. Including the results of heat and moisture resistance and heat aging resistance in Table 3, the physical property balance of heat and moisture resistance, heat aging resistance, and flame retardance was excellent.

Industrial Applicability

According to the present invention, it is possible to provide a polyorganosiloxane-containing-rubber-grafted polymer useful for achieving both of impact resistance and heat stability (preservation of mechanical properties, discoloration, and flame retardance) of thermoplastic resins, which has been difficult in the related art at a higher level.

**Claims**

1. A polyorganosiloxane-containing-rubber latex, comprising:
   a phosphorus element in a solid content.

2. The polyorganosiloxane-containing-rubber latex according to claim 1,
   wherein a total amount of sulfate ions and sulfonate ions included in 100 g of the solid content is 2.4 mmol or less.

3. The polyorganosiloxane-containing-rubber latex according to claim 1 or 2,
   wherein a content of the phosphorus element included in the solid content is 100 ppm to 10,000 ppm.

4. The polyorganosiloxane-containing-rubber latex according to any one of claims 1 to 3,
   wherein a content of a sulfur element included in the solid content is 750 ppm or less.

5. A polyorganosiloxane-containing-rubber-grafted polymer,
   wherein a content of a sulfur element is 110 ppm or less,
   a content of polyorganosiloxane is 5 mass% to 90 mass% with respect to 100 mass% of the polyorganosiloxane-containing-rubber-grafted polymer, and
   a content of a phosphorus element is 30 ppm to 3,000 ppm.

6. The polyorganosiloxane-containing-rubber-grafted polymer according to claim 5 comprising:
   a content of an emulsifier including sulfur is 80 ppm or less in terms of sulfur.

7. The polyorganosiloxane-containing-rubber-grafted polymer according to claim 5 or 6,
   wherein the content of the polyorganosiloxane is 30 mass% to 85 mass%.

8. The polyorganosiloxane-containing-rubber-grafted polymer according to any one of claims 5 to 7,
   wherein the content of the phosphorus element is 30 ppm to 750 ppm.

9. The polyorganosiloxane-containing-rubber-grafted polymer according to any one of claims 5 to 8, wherein the content of the sulfur element is 50 ppm or less.

10. The polyorganosiloxane-containing-rubber-grafted polymer according to any one of claims 5 to 9, wherein a content of an emulsifier including sulfur is 1 ppm or less in terms of sulfur.

11. A method for producing a polyorganosiloxane-containing-rubber latex, the method comprising:

polymerizing organosiloxane in an aqueous medium comprising organosiloxane, water, an organic acid catalyst, and an emulsifier,
wherein the organic acid catalyst is an organic acid catalyst including a phosphorus element.

12. The method for producing a polyorganosiloxane-containing-rubber latex according to claim 11, wherein the organosiloxane is hexamethylcyclotrisiloxane.

13. The method for producing a polyorganosiloxane-containing-rubber latex according to claim 11, wherein the organosiloxane is dihydroxy-terminated polydimethylsiloxane.

14. A polyorganosiloxane-containing-rubber-grafted polymer obtained by graft-polymerizing a vinyl monomer to the polyorganosiloxane-containing-rubber according to any one of claims 1 to 4.

15. The polyorganosiloxane-containing-rubber-grafted polymer according to claim 14, wherein the polyorganosiloxane is a composite rubber comprising polyorganosiloxane and polyalkyl (meth)acrylate.

16. A powder obtained by coagulation or spray-drying a latex of the polyorganosiloxane-containing-rubber-grafted polymer according to claims 14 or 15.

17. A resin composition comprising:
the powder of the polyorganosiloxane-containing-rubber-grafted polymer according to claim 16 and a resin.

18. A molded object obtained by molding the resin composition according to claim 17.

## INTERNATIONAL SEARCH REPORT

| International application No. |
| --- |
| PCT/JP2018/018101 |

**A. CLASSIFICATION OF SUBJECT MATTER**
Int.Cl. C08L83/04(2006.01)i, C08F283/12(2006.01)i, C08G77/08(2006.01)i, C08J3/12(2006.01)i, C08J3/16(2006.01)i

According to International Patent Classification (IPC) or to both national classification and IPC

**B. FIELDS SEARCHED**

Minimum documentation searched (classification system followed by classification symbols)
Int.Cl. C08L83/04, C08F283/12, C08G77/08, C08J3/12, C08J3/16

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-110738 A (NISSIN CHEMICAL CO., LTD.) 18 June 2015, claims, paragraphs [0015], [0049]– [0062] & US 2015/0125500 A1, claims, paragraphs [0052], [0094]–[0108] & EP 2868672 A1 & CN 104606075 A & KR 10-2015-0051155 A & TW 201533097 A | 1,3,11,12,14–18 |
| A | | 2,4-10,13 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 July 2018 (30.07.2018) | 07 August 2018 (07.08.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/018101

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2013-504670 A (WACKER CHEMIE AG.) 07 February 2013, claims, paragraphs [0014], [0058], [0108]-[0141] & US 2012/0171147 A1, claims, paragraphs [0022]-[0034], [0095], [0136]-[0178] & WO 2011/032824 A1 & EP 2478055 A1 & DE 102009029520 A1 & KR 10-2012-0048673 A & CN 102575103 A | 1-4,11,13<br>5-10,12,14-18 |
| X<br>A | JP 63-286434 A (SHIN-ETSU CHEMICAL CO., LTD.) 24 November 1988, claims, page 6, upper right column, line 12 to page 8, upper left column, line 14 & US 4894412 A, claims, column 8, line 26 to column 10, line 69 & KR 10-1994-0008993 B & CN 88103594 A | 1-4<br>5-18 |
| X<br>A | JP 62-292837 A (TORAY SILICONE CO., LTD.) 19 December 1987, claims (Family: none) | 1,3<br>2,4-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017098449 A
- WO 2010024311 A
- WO 2013129709 A
- JP 2005255961 A
- WO 2013157569 A
- JP 2015110738 A
- JP 2001288269 A
- JP H11222554 B